# EUROPEAN PATENT APPLICATION

(11) **EP 1 244 019 A2**
(43) Date of publication of application: **25.09.2002**
(21) Application number: 02252034.0
(22) Date of filing: 21.03.2002
(51) Int. Cl.: G06F 12/02

(54) **Memory device comprising a non-volatile memory**

(30) Priority: 22.03.2001 JP 2001083104; 28.08.2001 JP 2001257349; 29.08.2001 JP 2001260250
(71) Applicant: MATSUSHITA ELECTRIC INDUSTRIAL CO., LTD., Kadoma-shi, Osaka-fu (JP)
(72) Inventor: Toyama, Masayuki, Neyagawa-shi, Osaka-fu (JP); Sekibe, Tsutomu, Hirakata-shi, Osaka-fu (JP)
(74) Representative: Dempster, Benjamin John Naftel

(57) **Abstract**

In recent years, data volume to be handled have been increased, so that it has been required to increase the memory capacity without reducing portability and the like in a memory device provided with a non-volatile memory. In the present invention, a table for converting a logical address provided only in a conventional RAM to a physical address is provided in RAM and the non-volatile memory, thereby attempting to reduce the volume of RAM without lowering the memory capacity.

## Description

The present invention relates to a memory device provided with a non-volatile memory such as a flash memory capable of rewriting data.

As a memory device for portable equipment handling music data and video data, there has come a spreading use of a memory device with non-volatile memory such as a flash memory, capable of rewriting data, high in portability and requiring no back-up by a battery or the like.

Data write speed to a flash memory is, however, slower as compared with data transfer speed to a buffer in a memory device, therefore leading to creation of a wait time.

As an efficient data write operation on a flash memory, there has been a proposal in, for example, JP A 94-301601, on a write operation that data is concurrently written into plural physical blocks.

In order to access data already written in a flash memory, a requirement arises for specifying a physical address of the data in a flash memory according to a logical address thereof. Therefore, in RAM of a memory device, there is provided a table for converting a logical address of data written in a flash memory to a physical address in the flash memory.

In recent years, information handled by portable equipment has been increasingly built up and in order to cope with such a trend, increase in storage capacity of a memory device has realized through increase in non-volatile memory built in a memory device.

The increase in storage capacity, however, leads to increase in capacity of the table, resulting in a larger capacity and larger physical volume of RAM.

For example, in a case where a storage capacity of a memory device is 1 gigabytes and a size of a logical block of the memory device is 16 kilobytes, the 2^16 logical blocks can be configured; therefore, 16 bits are required for an address to specify a prescribed logical block. That is, a necessary capacity for use in conversion of a logical address to a physical address in a flash memory amounts to 16 bits × 2^16 = 128 kilobytes. The logical block which is a data block indicated by said logical address.

Furthermore, while an operation for efficient data writing in a flash memory has been proposed as described above, no data write method has been proposed for a high speed access by data read control section or the like to written data.

In a conventional write method, for example, of data written in a first physical block at a start position to a fifth physical block, a procedure to access data written in the fifth physical block was as follows.

First of all, for example, data read control section reads the first physical block to acquire an address of the second physical block stored in the last part of the first physical block and then, reads the second physical block. In a similar manner, the read control section reads the third physical block and the fourth physical block, and furthermore, reads an address of the fifth physical block held in the fourth physical block, followed by access to the fifth physical address. Therefore, in order to access the fifth physical block, the first to fourth physical blocks were required to read, causing increase in access time.

In a flash memory or the like in which erase unit of data is a physical block, erasure of data of a physical block having invalid data stored therein is accompanied with erasure of valid data stored in the physical block. Hence, for example, as data erase unit, a data relocation has been adopted, in which after valid data is relocated to another storage medium, data of the physical block having invalid data is erased. Therefore, in order to perform data erase with good efficiency, a necessity arises for increase in efficiency in the data relocation.

The present invention has been made in light of such problems and it is an object of the present invention to provide a memory device capable of not only controlling a storage medium having a large capacity with a compact control circuit, but also performing high speed access to written data.

In order to achieve the object, the present invention adopts the following means. That is, in order to reduce a capacity of RAM in a memory device provided with a non-volatile memory, a logical address is converted to a physical address using a primary allocation table provided in the RAM and a secondary allocation table provided in the non-volatile memory. By converting a logical address to a physical address using two tables, a capacity of the primary allocation table can be reduced. By reducing a capacity of the primary allocation table, a capacity and volume of the RAM can be decreased.

Moreover, in order to perform configuring logical blocks constituted of data blocks, reading on the logical blocks and erasure, with good efficiency, a memory device of the present invention includes: a physical block table; a logical block table; an entry counter; and an address register.

While, the physical block table indicates whether a physical block as an erase unit of data in the non-volatile memory is a physical block during use or an erased physical block. The address register indicates a physical block, which is an object for writing data. The entry counter indicates a data volume written into a physical block indicated in the address register. The logical block table indicates states of the logical blocks.

For example, when configuring a logical block specified by a prescribed logical address in the non-volatile memory, a write control section registers physical blocks constituting a logical block as physical blocks during use on the physical block table to update the address register on the basis of write units constituting the logical block and to update the entry counter on the basis of a data volume of the logical block.

The write control section, when configuring a logical block, writes into, for example, a representative write unit of write units constituting a physical block, chain information for specifying a physical address of a write unit other than the representative write unit such that a read control section or the like can access the logical block configured in the non-volatile memory at high speed. The term "write unit" is a unit of writing data in the non-volatile memory and the logical block is constituted of plural write units.

Moreover, the write control section registers information specifying a physical address of a representative write unit of a logical block configured in the non-volatile memory on the secondary allocation table.

The read control section, when receiving a read request for a logical block specified by a prescribed logical address, reads information registered on the secondary allocation table to acquire a physical address of a representative write unit using the logical address. The read control section, when acquiring a physical address of a representative write unit, reads chain information written in the representative write unit. The chain information is a physical address of other write units constituting the same logical block as the representative write unit. The read control section reads the chain information to acquire a physical address of another write unit. The read control section, when acquiring the physical address of another write unit, reads chain information written in another write unit to acquire a physical address of still another write unit. By reading chain information pieces in such away, the read control section acquires physical addresses of all the write units constituting a logical block, which is an object for a read request.

Note that, chain information written in a representative write unit may be information for specifying physical addresses of all the other write units constituting the same logical block as the representative write unit. In this case, by reading chain information on the representative write unit, the read control section can acquire physical addresses of all the write units constituting a logical block, which is an object for a read request.

The read control section, when acquiring a physical address of a write unit as described above, reads data stored in the write unit.

An erase control section erases data stored in a selected physical block as follows. The erase control section refers to the physical block table, the logical block table, the address register and others to understand physical blocks constituting a small number of valid logical blocks . Then, the erase control section selects the physical blocks as erase physical blocks to copy a valid logical block constituted of the erase physical blocks to other physical blocks. Then, the erase control section erases data of the erase physical blocks . By selecting an erase physical block in such a way, a data volume in copying a valid logical block is smaller when in erasure of data, leading to quick data erasure.
Fig. 1 is a schematic block diagram showing a memory device;
Fig. 2 is an illustration showing a construction of a non-volatile memory;
Fig. 3 is a flowchart showing a concrete example, preparation procedure for a physical block table;
Fig. 4 is an illustration showing a physical block table;
Fig. 5 is a flowchart showing a concrete example of a preparation procedure for a logical block table;
Fig. 6 is an illustration showing a logical block table;
Fig. 7 is a flowchart showing a concrete example of a preparation procedure for a primary allocation table;
Fig. 8 is an illustration showing a primary allocation table;
Figs. 9A and 9B are illustrations for an address register and an entry counter, respectively;
Fig. 10 is a flowchart showing a data write procedure;
Fig. 11 is a flowchart showing a data write procedure;
Fig. 12 is an illustration showing a concrete example in which chain information has been written into a flash memory;
Fig. 13 is a conceptual illustration showing a procedure for acquiring a physical address of a preceding page;
Fig. 14 is a flowchart showing a data read procedure;
Fig. 15 is a flowchart showing a data erase procedure;
Fig. 16 is a flowchart showing a concrete example of a preparation procedure for a logical block table; and
Fig. 17 is a flowchart showing a concrete example of a preparation procedure for a primary allocation table.

### First Embodiment

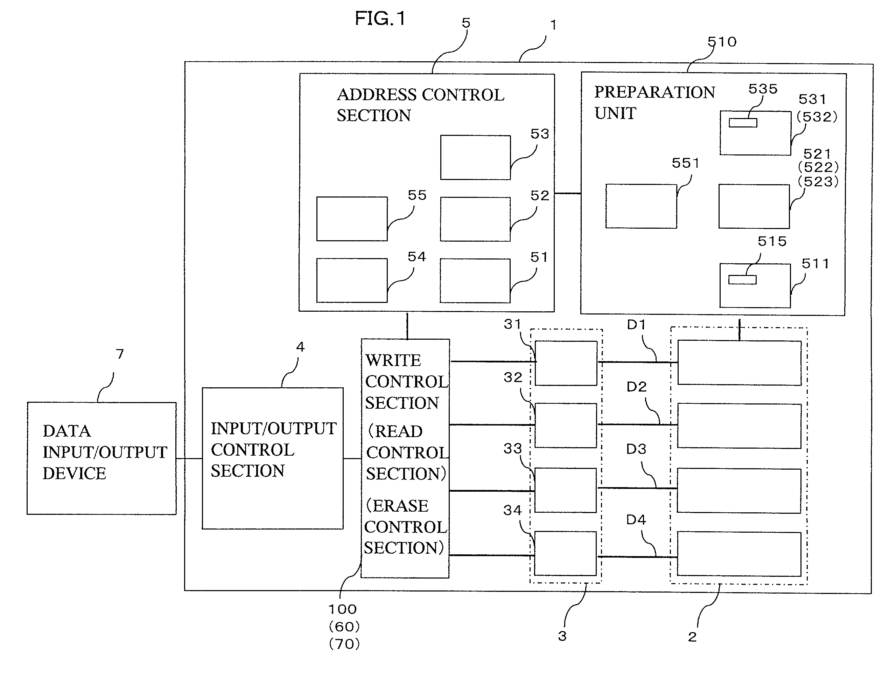

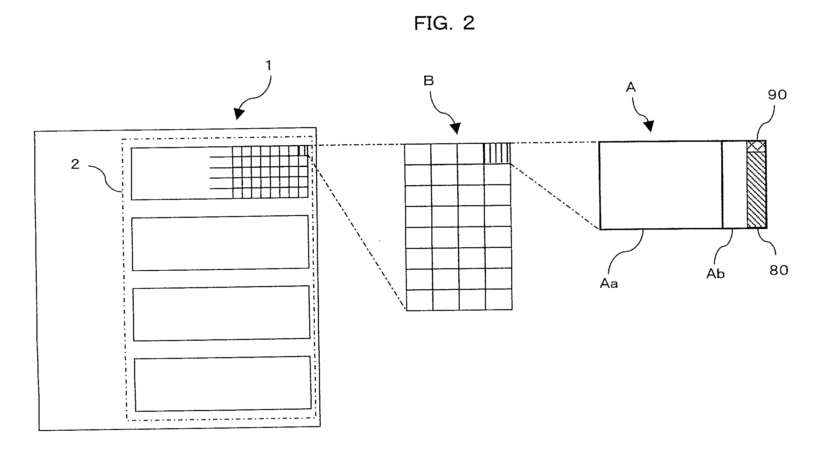

A memory device 1 of the present invention, as shown in Fig. 1, includes plural flash memories 2, each of which is a non-volatile memory. Each of the flash memories 2 is, as shown in Fig. 2, constituted of plural physical blocks B. Each of the physical blocks B is constituted of plural pages A. A data write unit in a flash memory 2 is a page A described above and a data erase unit therein is a physical block B.

Note that while, in the embodiments, description will be given on the precondition that a storage capacity of all of a flash memory 2 is 1 gigabytes, a storage capacity of a physical block B is 16 kilobytes and a storage capacity of a page A is 512 bytes, storage capacities of a flash memory 2, a physical block B and a page A are not limited to those above described capacities.

### (First Embodiment)

### [Operations in Power-On]

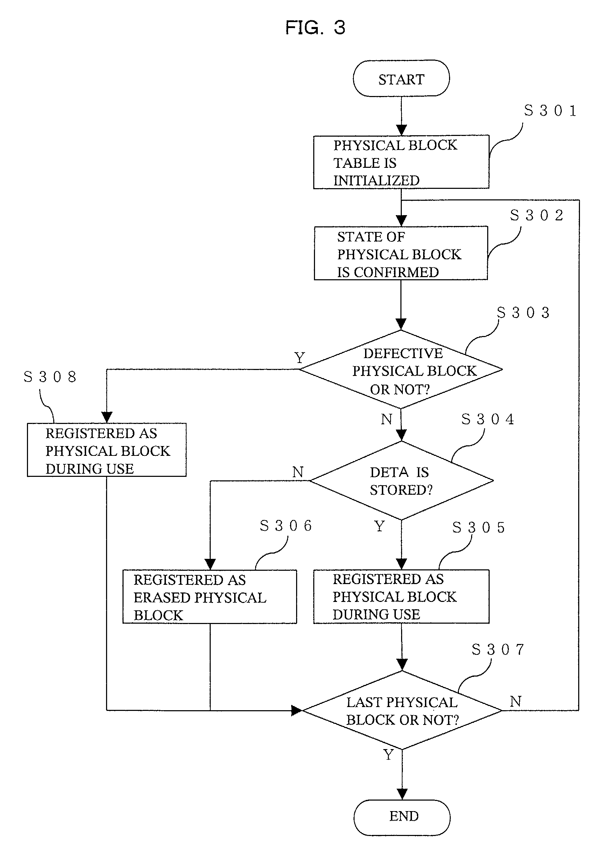

When power is turned on in the above memory device 1, a physical block table preparation unit 521 provided in a preparation unit 510 prepares a physical block table 52 indicating use states of the respective physical blocks B on RAM of an address control section 5 provided in the memory device 1. In Fig. 3, here is shown an example preparation procedure for the physical block table 52.

First of all, the above physical block table preparation unit 521 initializes values of the physical block table 52 (S301 in Fig. 3). As a method for initialization performed by the physical block table preparation unit 521, for example, all the values of the physical block table 52 are converted to values indicating respective erased physical blocks.

Subsequent to this, the physical block table preparation unit 521 refers to a prescribed page A constituting a prescribed physical block B shown in Fig. 2 to confirm a state of the prescribed physical block B (S302 in Fig. 3). The prescribed page indicates, for example, a page A to which data is, as the start, written in a physical block B in the initial state.

In order to confirm a state of a physical block B, the physical block table preparation unit 521, here, operates as a defective physical block determination unit 522 determining whether or not a defect exists in a prescribed physical block. That is, the physical block table preparation unit 521 confirms information in a prescribed page A belonging to a to-be-confirmed physical block B to determine whether or not the physical block B is a defective physical block into which data can not be written normally because of damage or the like on the physical block B (S303 in Fig. 3).

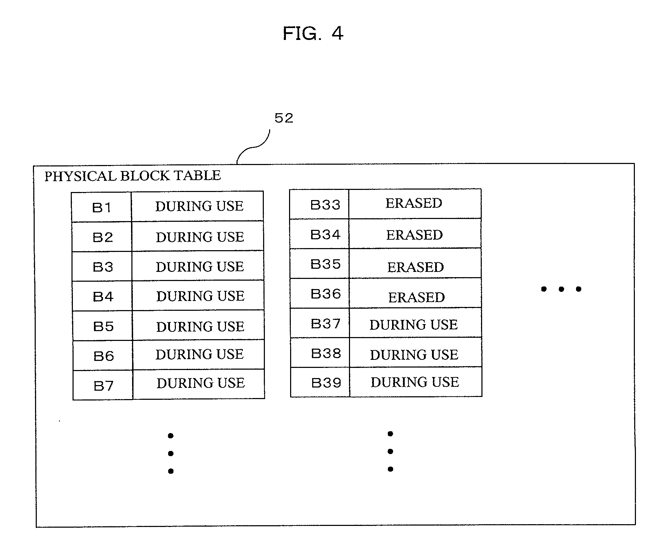

For example, if it is determined that the to-be-confirmed physical block B1 is not a defective physical block, then the physical block table preparation unit 521 determines whether or not there exists a page A having data stored therein in the to-be-confirmed physical block B1 (S304 in Fig. 3). If it is determined that there exists a page A having data stored therein, the physical block table preparation unit 521 recognizes that a use state of the to-be-confirmed physical block B1 is 'during use.' Then, the physical block table preparation unit 521 registers the to-be-confirmed physical block B1 on the physical block table 52 shown in Fig. 4 as a physical block during use (S305 in Fig. 3). If it is determined that there exists no page A having data stored therein, the physical block table preparation 521 recognizes that a use state of the to-be-confirmed physical block B1 is "erased." Then, the to-be-confirmed physical block B is registered on the physical block table 52 as an erased physical block (S306 in Fig. 3).

When, as described above, the physical block during use or the erased physical block is registered on the physical block table 52, the physical block table preparation unit 521 determines whether or not a to-be-confirmed physical block B is the last physical block B (Fig. 3, S307). If it is determined that a to-be-confirmed physical block B is not the last physical block B, another physical block B not confirmed yet is confirmed on its state (S302 in Fig. 3). If it is determined that a to-be-confirmed physical block B is the last physical block B, the physical block table preparation unit 521 terminates preparation of the physical block table 52.

In such a way, for example, the physical block table 52 as shown in Fig. 4 is prepared. In Fig. 4, as for physical blocks B1, B2, ···, it is shown by the physical block table 52 that each is a physical block during use or an erased physical block.

Note that if it is determined that a to-be-confirmed physical block B is a defective physical block, the defective physical block determination unit 522 is recommended to register the to-be-confirmed physical block B on the physical block table 52 as a physical block during use (S308 in Fig. 3).

That is, when a physical block is determined to be defective by the defective physical block determination unit 522, the physical block table preparation unit 521 is also operated as a use state setting unit 523 setting a use state of the physical block B shown by the physical block table 52 as 'during use.'

The reason why a defective physical block is set in the physical block table 52 as a physical block during use is that when in a data write operation described later, the write control section 100 would otherwise select a physical block B registered as an erased physical block on the physical block table 52 as a physical block B of an object for data writing. If a defective physical block was set in the physical block table 52 as an erased physical block, the write control section 100 would have a chance to select the defective physical block as a physical block B of an object for writing. In that case, while it could be allowed that the write control section 100 recognizes that data cannot be written in the defective physical block B, followed by again selecting another physical block B of an object for writing, the write operation unfavorably spends an extra time for the reselection.

By registering a defective physical block as a physical block during use as described above, the defective physical block is excluded from physical blocks of objects for writing and as a result of the exclusion, a time for a write operation can be reduced even in a non-volatile memory used in the presence of a defective physical block as a precondition.

When power is turned on in the memory device 1, a logical block table 53 is prepared on RAM of the address control section 5 by a logical block table preparation unit 531 provided in the preparation unit 510 in addition to the physical block table 52. Preparation of the logical block table 53 may be performed at the same time as preparation of the physical block table 52, or after or before the preparation of the physical block table 52.

The logical block table 53 is a table showing whether data of each of logical blocks C is in a valid state ( 'valid' ) or an invalid state ('invalid'). Each of the logical blocks C is a data block indicated by a logical address and constituted of more than one physical block B. Fig . 5 is a flowchart showing an example preparation procedure for a logical block table 53.

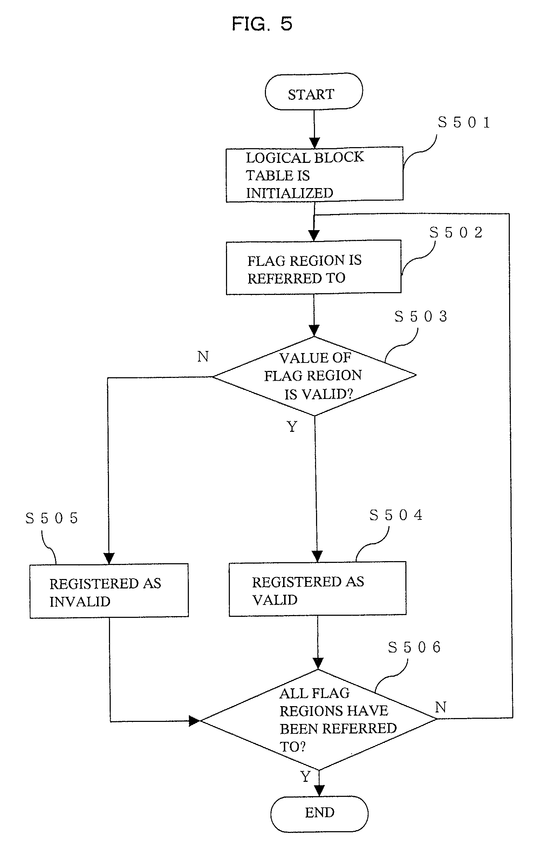

The logical block table preparation unit 531, as shown in Fig. 5, initializes the logical block table 53 at the start (S501 in Fig. 5). As an initialization method performed by the logical block table preparation unit 531, there is exemplified a method converting all the values in the logical block table 53 to values indicating 'invalid.'

Subsequent to this, the logical block table preparation unit 531 refers to a value of a flag region 90 provided in a management region Ab of a page A having '01000' as prescribed 5 bits of a bit sequence indicating its physical address (S502 in Fig. 5). Note that the reason why the logical block table preparation unit 531 refers to the flag region 90 provided in a page A, prescribed 5 bits of whose physical address are '01000' is that in the memory device 1 of this embodiment, an architecture is such that a secondary allocation table 80 (detailed later) is stored only in a page A of the physical address. That is, the logical block table preparation unit 531 refers only to a flag region 90 of a page A into which the secondary allocation table 80 can be stored.

A value of the flag region 90 is management information indicating whether a secondary allocation table 80 stored in the same management region Ab as the flag region 90 is valid or invalid. In order to realize high speed preparation of a logical block table, no necessity arises for the logical block table preparation unit 531 to refer to all the flag regions 90 of pages A, prescribed 5 bits of each of whose physical addresses are '01000'. For example, the logical block table preparation unit 531 may refer to only a flag region 90 of a page A, prescribed 5 bits of whose physical address are '01000,' and belonging a physical block B registered as a physical block during use on the physical block table 52.

When referring to the flag region 90, the logical block table preparation unit 531 determines whether a value of the flag region 90 is a valid value or an invalid value (S503 in Fig. 5). If it is determined that a value of the flag region 90 is a valid value, the logical block table preparation unit 531 registers a logical block C that is specified by a second physical address Ca registered on the secondary allocation table 80, onto the logical block table 53 as 'valid' (S504 in Fig. 5). The "second physical address Ca" is information for specifying a physical address of a prescribed one page A (a preceding page ar) constituting a logical block C.

On the other hand, if it is determined that a value of a flag region 90 is an invalid value, the logical block table preparation unit 531 goes to S505 without performing S504.

The logical block table preparation unit 531, when registering 'valid' or 'invalid' on the logical block table 53 as described above, determines whether or not all the to-be-referred flag regions 90 have been referred to (S505 in Fig. 5).

If it is determined that all the flag regions 90 have not been referred to, the logical block table preparation unit 531 refers to another flag region 90 not referred yet to (S502 in Fig. 5). Then, the logical block table preparation unit 531 repeats a similar operation till it is determined that all the flag regions 90 have been referred to.

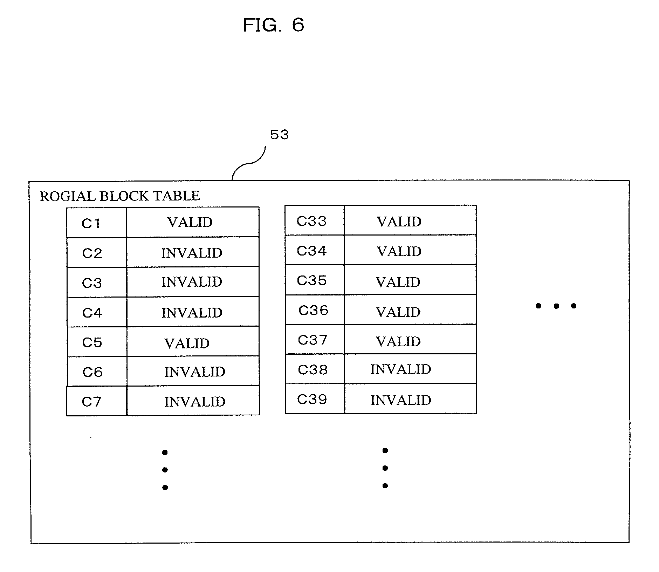

The logical block table 53 as shown in Fig. 6 is prepared in such a way. Note that there exist defective physical blocks registered on the physical block table 52 as a physical block during use of the defective physical blocks. And, of such defective physical blocks, there exist defective physical blocks including a page (a preceding page as described later), prescribed 5 bits whose physical address are '00000'. The logical block table preparation unit 531 preferably registers a logical block C configured on such a defective physical block B on the logical block table 53 as 'valid.'

That is, the logical block table preparation unit 531 is operated as a valid state setting unit 532 setting a logical block C configured on the defective physical block in the logical block table 53 as 'valid.'

This is because in a data erase operation described later, physical blocks B on which a small number of logical blocks C that are registered as 'valid' on the logical block table 53, is configured are authorized as data of an object for erasure. The reason why registering as 'valid' in such a way is that the defective physical blocks do not come to be actually objects for erasure by registration of the defective physical blocks into each of which no data is written as 'valid'

By doing so, since all the logical blocks C configured on defective physical blocks are registered on the logical table 53 as 'valid, ' the defective physical blocks are excluded from physical blocks of objects for erasure. As a result, unnecessary erasure of data can be prevented from occurring.

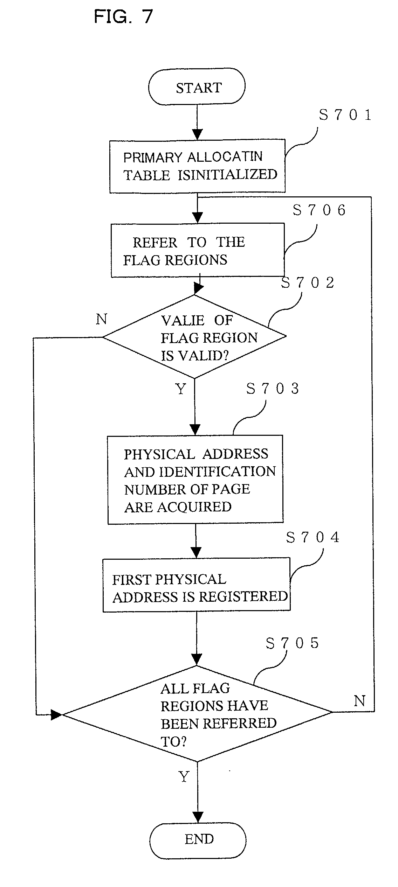

Moreover, a primary allocation table 51 is also prepared on RAM of the address control section 5 in addition to the physical block table 52 and the logical block table 53. For example, when the physical block table 52 and the logical block table 53 are, as described above, prepared, a primary allocation table preparation unit 511 provided in the preparation unit 510 starts preparation of the primary allocation table 51. Here, Fig. 7 is a flowchart showing an example preparation procedure for preparing the primary allocation table 51.

First of all, the primary allocation table preparation unit 511 initializes the primary allocation table 51 (S701 in Fig. 7) and subsequent to this, refers to a flag region 90, prescribed 5 bits of whose physical address are '01000.' Note that the primary allocation table preparation unit 511 may also refer only to a flag region 90 of a physical block B registered as a physical block during use in the physical block table 52 (S706 in Fig. 7).

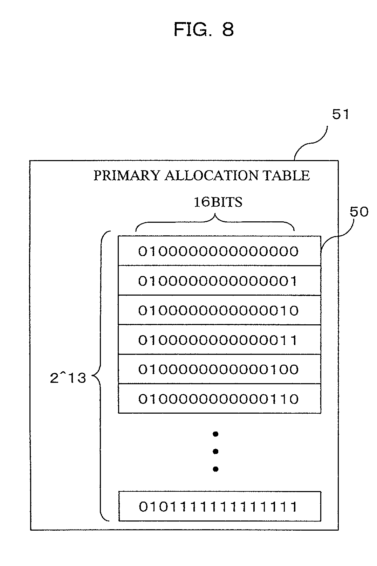

The primary allocation table preparation unit 511, when referring to a flag region 90, determines whether a value of the flag region 90 is a valid value or an invalid value (S702 in Fig. 7). If it is determined that the flag region 90 is a valid value, the primary allocation table preparation unit 511 acquires a physical address of a page A to which the flag region 90 belongs and an identification number (including upper 13bits of a logical address) held by a secondary allocation table 80 stored in the page A (S703 in Fig. 7). The identification number is an identifier for specifying one region 50 within the primary allocation table 51 shown in Fig. 8. In this embodiment, an identification number is constituted of upper 13bits of logical address.

The primary allocation table preparation unit 511, as shown in Fig. 8, registers prescribed 16 bits of a physical address of a page A in which a secondary allocation table is stored on a region 50 indicated by an acquired identification number as a first physical address (S704 in Fig. 7). In the prescribed 16 bits , the 5 bits of '01000' in common with physical addresses of pages A into each of which a secondary allocation table 80 can be stored, are not included. The reason why such prescribed 16 bits are registered is as follows. Anon-volatile memory 2 of this embodiment includes 2^21 pages A (1 gigabytes/512 bytes) and a physical address of a page A is expressed with 21 bits. A page A into which a secondary allocation table 80 can be stored has prescribed 5 bits of its physical address as '01000.' Therefore, if prescribed 16 bits of a physical address can be specified, a prescribed one secondary allocation table can be specified of all the secondary allocation tables 80 stored in the non-volatile memory 2.

By determining in advance a page A into which a secondary allocation table 80 can be stored in such a way, a capacity of the primary allocation table can be smaller. Note that that a page A, prescribed 5 bits of whose physical address are '01000,' is a page A storing a secondary allocation table 80, is stored in a memory such as ROM in the memory device 1. In this embodiment, a page A, prescribed 5 bits of whose physical address is '01000,' is a page A into which a secondary allocation table 80 is stored. A page A other than a page A, prescribed 5 bits of whose physical address is '01000,' however, may store a secondary allocation table 80.

The primary allocation table preparation unit 511, when registering a first physical address, determines whether all the to-be-referred flag regions 90 have been referred to (S705 in Fig. 7). If it is determined that all the flag regions 90 have not been referred to, the primary allocation table preparation unit 511 performs reference to another flag region 90 not referred yet to (S706 in Fig. 7). Then, a similar operation is repeated till it is determined that all the flag regions 90 have been referred to.

Note that since in this embodiment, 2^13 secondary allocation tables 80 corresponding to flag regions 90 each indicating a valid value are stored in the non-volatile memory 2, the number of the regions 50 amounts to 2^13. Therefore, a capacity of the primary allocation table 51 is 16 bits × 2^13 = 16 kilobytes. Description will be later given of the reason why the number of secondary allocation tables corresponding to flag regions 90 each indicating a valid value is 2^13.

On the other hand, if it is determined that a flag region 90 is an invalid value, the primary allocation table preparation unit 511 goes to S705 without registering a physical address and an identification number on the primary allocation table 51, which are registered in the above case.

While, in such a way, the physical block table 52, the logical block table 53 and the primary allocation table 51 are prepared, the order in which the tables are prepared is not limited to the order described already, but for example, the three tables may be simultaneously prepared.

Moreover, while in the above description, the physical block table 52, the logical block table 53 and the primary allocation table 51 are prepared independently by respective different table preparation units, the respective table preparation units may prepare the physical block table 52, the logical block table 53 and the primary allocation table 51 in a cooperative manner as described below.

For example, in case where the physical block table preparation unit 521 prepares the physical block table 52 and when it is determined whether or not data is stored in a physical block, there exists a chance to detect a secondary allocation table 80 in the physical block B. When the physical block preparation unit 521 detects a secondary allocation table 80, the logical block table preparation unit 531 and the primary allocation table preparation unit 511 sequentially determine whether a value of a flag region 90 corresponding to the secondary allocation table 80 is a valid value or an invalid value. Moreover, the logical block preparation unit 531, when a flag region 90 indicates a valid value, registers a logical block C specified by a second physical address Ca shown in the secondary allocation table 80 on the logical block table 53 as 'valid.' On the other hand, the primary allocation table preparation unit 511, when a flag region 90 indicates a valid value, registers prescribed 16 bits of a physical address of a page A stored in the secondary allocation table 80 on a region 50 indicated by an identification number held by the secondary allocation table 80.

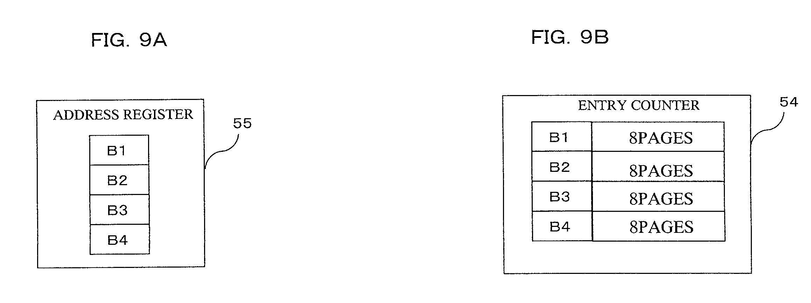

Moreover, when power is turned on, an address register preparation unit 551 provided in the preparation unit 510 may prepare an address register 55 shown in Fig. 9A and an entry counter 54 shown in Fig. 9B on RAM of the address control section 5 according to a method as described below:

First of all, the address register preparation unit 551 initializes the address register 55. Then, the address register preparation unit 551 refers to the physical block table 52 to register physical addresses of a prescribed number of erased physical blocks on the address register 55.

The address register preparation unit 551, when registering a physical address of a physical block B, registers the number (that is '0') of pages on which data of physical blocks B registered on the address register 55 is written on the entry counter 54 provided on the RAM, as shown in Fig. 9B.

Note that a procedure may be allowed that update of the address register 55 and registration of the number of pages on the entry counter 54 are both not performed when power is turned on, but, for example, may be performed when in data write operation on the non-volatile memory 2. Description will be given of a case where the number of pages on which data is stored is registered on the entry counter 54. Note that the address register preparation unit 551 may register the number of pages in which no data is stored and the number of logical blocks C configured on physical blocks B on the entry counter 54.

### [Writing]

When the physical block table 52, the logical block table 53 and the primary allocation table 51 are prepared, the memory device 1 can receive writing of data from the data input/output device 7 . Note that in this embodiment, a capacity of a logical block C configured in the non-volatile memory 2 is set at 16 kilobytes. For this reason, the non-volatile memory 2 includes 1 gigabyte/16 kilobytes = 2^16 logical blocks C configured therein; therefore, a necessity arises for 16 bits information in order to express a logical block C. Hence, a data write request to the memory device 1 from the data input/output device 7 is constituted of data of 16 kilobytes and a logical address S of 16 bits.

A write request transmitted from the data input/output device 7 is received by the input/output control section 4 provided to the memory device 1.

The input/output control section 4, when receiving data and a logical address S, not only divides the received data into 32 data blocks in write units each of 512 bytes, but also transfers 8 data blocks at a time to buffer unit 31 to 34. The input/output control section 4 transfers a logical address S included in a received write request to the write control section 100 provided to the memory device 1.

The write control section 100, when receiving a logical address S, determines on which set of physical blocks B a logical block C1 constituted of to-be-written data is configured. Note that in this embodiment, since the buffer unit 31 to 34 and the non-volatile memory 2 are connected to each other by 4 buses D1 to D4, the write unit 100 is configured to be provided commonly to 4 physical blocks B.

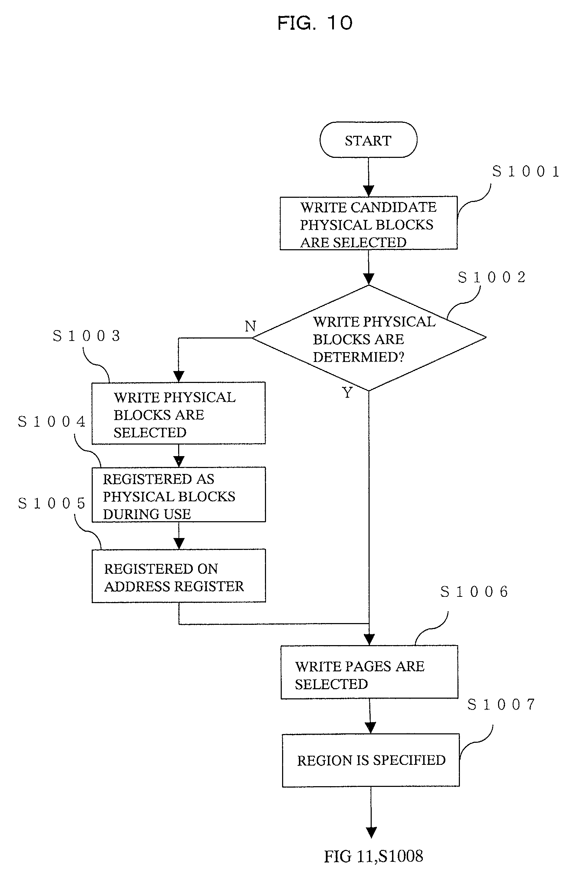

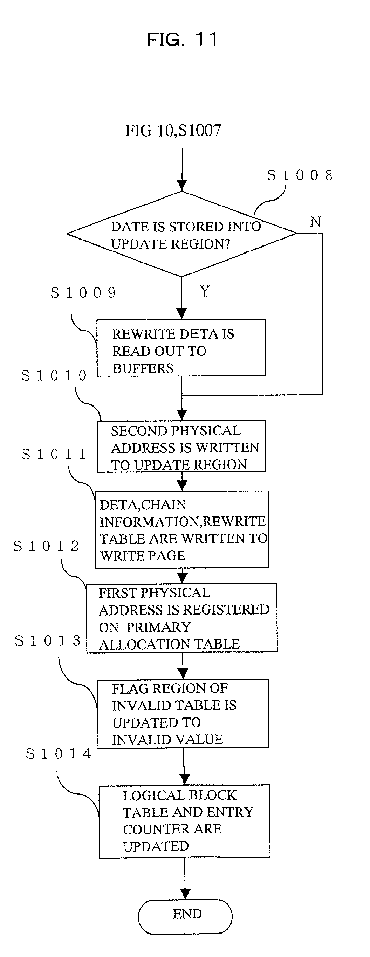

First of all, the write control section 100 registers physical addresses of 4 physical blocks on the address register 55. The reason why 4 physical blocks are registered is that in this embodiment, the 4 buses D1 to D4 are provided in the memory device 1. For example, when 4 physical blocks B1 to B4 are, as shown in Fig. 9A, registered on the address register 55, the write control section 100 determines the physical blocks B1 to B4 as write candidate physical blocks (S1001 in Fig. 10). As shown in Fig. 9B, the write control section 100, when registering physical addresses of physical blocks B, registers the number (that is, '0') of pages on which data of physical blocks B registered on the address register 55 is written on the entry counter 54, which is described above. At this time, the write control section 100 functions as the address register preparation unit 551.

Note that the write unit 100 determines a physical block B registered in advance as a write candidate physical block in a case where the physical block B has been registered in advance on the address register 55.

Then, the write control section 100 refers to the entry counter 54 to determine whether or not the write candidate physical block is used as a write physical block (S1002 in Fig. 10). Here, since 32 to-be-written data blocks are stored in 4 physical blocks B, 8 data blocks are to be stored into each one physical block B. Therefore, the write control section 100 refers to values of the entry counter 54 corresponding to the 4 write candidate physical blocks to confirm whether or not a current count value is 24 or less, that is whether or not the number of pages on which data has not been written is 8 or more.

Since values of the entry counter 54 corresponding to physical blocks B1 to B4 here are 8 as shown in Fig. 9B, the write control section 100 determines to use the write candidate physical blocks B1 to B4 as write physical blocks B1 to B4.

Note that in a case where the entry counter 54 corresponding to the write candidate physical blocks B1 to B4 holds values of 25 or more, the write control section 100 determines the write candidate physical blocks B1 to B4 as write disabled physical blocks. Subsequent to this, the write control section 100 refers the physical block table 52 to select the same number of erased physical blocks as that of the write disabled physical blocks determined here. Moreover, the write control section 100 determines the erased physical blocks selected here as write physical blocks to register the write physical blocks on the physical block table 52 as physical blocks during use (S1003 to S1004 in Fig. 10). Moreover, the write control section 100 registers physical addresses of the write physical blocks that have been registered here as physical blocks during use on the physical block table 52, on the address register 55 (S1005 in Fig. 10).

Note that the reason why physical addresses of physical blocks B with a value of the entry counter 54 of 25 or more are held in the address register 55 is that there exists a case where no update of the address register 55 is performed in a period from a previous write operation till the current write operation. That is, if the address register 55 is not updated, the address register 55 assumes a state where physical addresses of physical blocks B whose data was written on all the pages A by writing of data in the previous time have been held therein.

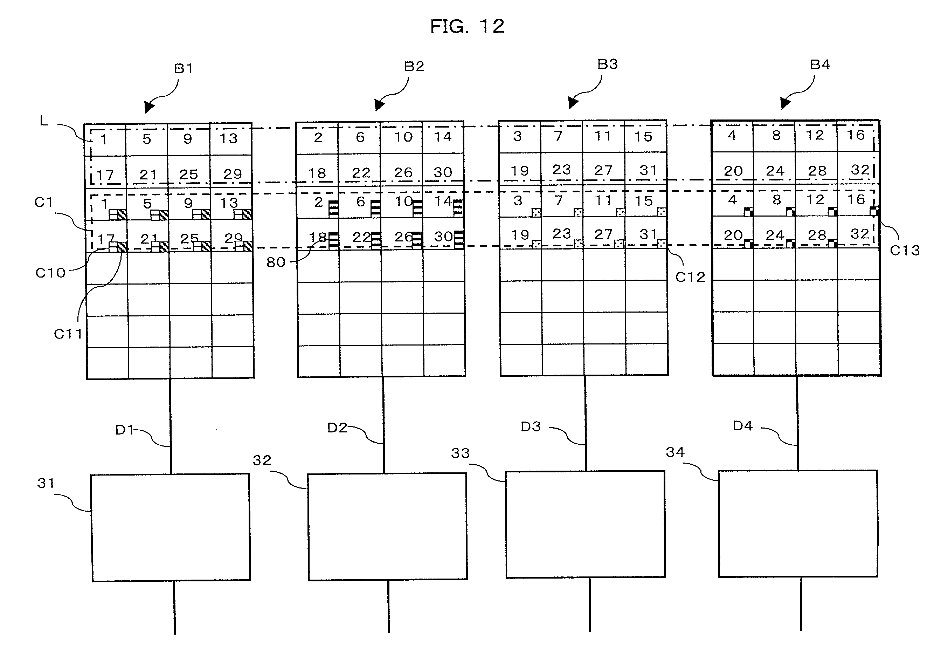

The write control section 100, when determining 4 write physical blocks, refers the entry counter 54 to select 8 write pages on which a data block constituting a logical block C1 is written from each write physical block (S1006 in Fig. 10). Note that in this embodiment, the write control section 100 performs sequentially write operations on pages A in increasing order of physical addresses from smallest to largest. Therefore, when values of the entry counter 54 corresponding to write physical blocks B1 to B4 as shown in Fig. 9B assumes '8', data has been written on a page A (in pages enclosed by a dashed dotted line L of Fig. 12) with the 8th smallest physical address in increasing order starting from a page A with the smallest physical address of the pages A constituting physical blocks B1 to B4.

Therefore, the write control section 100 determines pages from the 9th smallest physical address to the 16th smallest address as write pages of the pages A constituting the write physical blocks B1 to B4 to store physical addresses of the determined write pages.

Then, the write control section 100 uses prescribed bits S1 (in this embodiment, since there exists 2^13 regions 50 as described above, the higher 13 bits) of a logical address S transferred from the data input/output device 7 together with data to specify one region 50 of the primary allocation table 51 (S1007 in Fig. 10). Note that the one region 50 of the primary allocation table 51 may be specified using prescribed 13 bits of a logical address, for example, the lower 13 bits thereof.

The write control section 100 reads prescribed 16 bits of the first physical address registered on a specified region 50, that is a physical address of a page A in which a secondary allocation table 80 to add '01000' to the read physical address to generate a physical address of a page A in which the secondary allocation table 80 is stored.

The write control section 100, when generating a physical address of a page A in which a secondary allocation table 80 is stored, determines whether or not, the second physical address is stored in a page A of the generated physical address (S1008 in Fig. 11).

The write control section 100, when determining that data and others have been already stored in a page A, not only reads out a secondary allocation table 80 stored in a management region Ab of the page A as a rewrite table into the buffers 31 to 34, but also authorizes a secondary allocation table 80 stored in the page A as an invalid table (S1009 in Fig. 11). Note that the write control section 100 reads out the secondary allocation table 80 into respective vacant regions of buffer 31 to 40 so that other data stored in buffer 31 to 34 is overwritten with the secondary allocation table 80. Then, the write control section 100 uses other prescribed bits of a logical address S, which is here the lower 3 bits, to specify an update region 81 for the read-out rewrite table and to determine whether or not a second physical address Ca has been written into the update region 81. Note that in this embodiment, a rewrite table (a secondary allocation table 80) is constituted of 8 update regions. Description will be later given of the reason why a rewrite table is constituted of 8 update regions 81.

Only in a case where a second physical address Ca has been written into an update region 81, the write control section 100 regards a logical block C specified by the second physical address Ca as 'invalid' to register the state on the logical block table 53.

Then, the write control section 100 writes prescribed 16 bits of a physical address of a preceding page representing the determined write pages into the specified update region 81 as a second physical address Ca (S1010 in Fig. 11). Note that the reason why only the prescribed 16 bits are registered on an update region 80 is that in this embodiment, prescribed 5 bits of a physical address of a preceding page ar representing all the pages is '00000.' Note that information that prescribed 5 bits of a physical address of a preceding page ar is '00000' may be stored in advance in the write unit 100 or stored in a memory such as ROM in the memory device 1.

The reason why in such a way, a rewrite table is read out onto the buffer unit 31 to 34 to rewrite data in an update region 81 with the read-out rewrite table is that no overwriting of data can be performed in the non-volatile memory 2.

When a second physical address Ca is written into an update region 81, the write control section 100 writes a data block held in the buffer unit 31 to 34 into a data region Aa of a write page using the buses D1 to D4. Moreover, the write control section 100 writes the rewrite table into a management region Ab of a prescribed one or plural write pages and writes chain information into a management region Ab of one or plural write pages as shown below (S1011 in Fig. 11). The "chain information" is information for acquiring a physical address of another write page constituting a logical block C.

For example, if a preceding page ar of a logical block C1 is a page 1 as shown in Fig. 12, a physical address of a page 2 of a logical block C1 is written into a management region Ab of the page 1. In a similar way, if chain information expressing a physical address of a page (N + 1) is stored into a management region Ab of a page N, the write control section 60 described later can attain physical addresses of all the pages 2 to 32 constituting a logical block C1 shown in Fig. 12 by tracing the chain information pieces.

It is natural that in this case, in order for the read control section 60 to acquire a physical address of a page 20, a necessary arises for reading chain information stored in pages 1 to 19. Therefore, a longer access time of the read control section 60 to the page 20 is spent by reading a series of chain information pieces.

Therefore, in order to reduce the access time, it is also recommended, for example, to write physical addresses of pages from 2 to 32 into the management area Ab of a preceding page ar (a page 1). With such an architecture adopted, physical addresses of the pages 2 to 32 can be acquired by reading chain information stored in the management region Ab of the page 1 with the read control section 60, resulting in reduction in access time by those to respective pages.

Note that physical addresses of the pages A constituting the logical block C1 can be easily obtained, for example, from physical addresses of start pages 1 to 4 of the respective physical blocks B1 to B4 constituting the logical block C1. If a physical address of the page 20 is desired to obtain, it is only required to add 4 to a physical address of the page 4. For this reason, it is also recommended to write physical addresses of the pages 2 to 4 as chain information into the management region Ab of the page 1 (the preceding page ar) instead of writing physical addresses of the pages 2 to 32 as chain information thereinto.

Moreover, there exists a case where, for example, management information such as a secondary allocation table and error correction information are written into the management region Ab in addition to the chain information. Since the management region Ab cannot secure a so large region, however, the management region Ab, when storing chain information, cannot store a secondary allocation table and others therein additionally.

For example, it is assumed this way; of the pages 1 to 32 constituting the logical blocks C1 shown in Fig. 12, the management regions Ab of the pages 2, 6, 10, 14, 18, 22, 26 and 30 can each store a secondary allocation table 80.

If, as described above, chain information expressing a physical address of a page (N + 1) is stored into the management region Ab of a page N, chain information is also written into the management regions Ab of the pages 2, 6, 10, 14, 18, 22, 26 and 30, respectively, in which secondary allocation tables 80 are stored. When chain information is stored in the management regions Ab of the pages 2, 6, 10, 14, 18, 22, 26 and 30, respectively, there arises a case where a capacity for storing a secondary allocation table 8 in a management region Ab thereof cannot be secured. Therefore, the write control section 100 writes chain information onto a page A other than pages on each of which a secondary allocation table is stored in a management region Ab.

To be detailed, chain information C11 expressing physical addresses of pages {(4k + 3), k = 0, 1, 2, ··· , 7} is written into the management region Ab of a page (4k + 1) instead of a page (4k + 2) in which a secondary allocation table is stored. Therefore, as shown in Fig. 12, chain information C10 expressing a physical address of a page (4k + 2) and chain information C11 expressing a physical address of a page (4k + 3) are written into the management region Ab of a page (4k + 1). Moreover, chain information C12 expressing a physical address of a page (4k + 4) is written into the management region Ab of the page (4k + 3) while chain information C13 expressing the page (4k + 1) is written into the management region Ab of the page (4k + 4).

By writing chain information pieces in such a way, chain information can be stored into a management region Ab other than a management region Ab in which a secondary allocation table 80 is stored.

Note that if chain information expressing a physical address of a page (N + 1) is stored into the management region Ab of a page N, the read control section 60 can acquire chain information expressing a physical address of a page (N + 1) by referring to the management region Ab of a page N. On the other hand, in a case where writing of chain information as described above is performed, even if the read control section 60 refers to the management region Ab of a page (4k + 2) in which a secondary allocation table 80 is stored, chain information expressing a physical address of the next page (4k + 3) cannot be attained. Therefore, the read control section 60, when reading is performed on a page (4k + 1), reads not only chain information C10 but also all the chain information including chain information C11 as well to hold chain information C11. Then, it is only required that the read control section 60 reads the page (4k + 2) and thereafter, acquires a physical address of the page (4k + 3) using the chain information C11 having held already.

While in the above example, the chain information C10 and C11 is written into the management region Ab of the page (4k + 1) as shown in Fig. 12, the chain information C12 and C13 may also be written into the management region Ab of the page (4k + 1).

Since management information, however, inevitably has to have data such as error correction information therein, which cannot be replaced with others, there arise cases where the management region Ab of the page (4k + 1) cannot secure a capacity for, or is not suited for writing all chain information C10 to C13 therein. Therefore, the number of chain information pieces to be written into one management region Ab is determined in advance. The write control section 100 is operated such that after a prescribed number of chain information pieces are written into one management region Ab, other chain information pieces left unwritten are written into the management region Ab of another page A. The prescribed number here has only to be determined on the basis of particulars such as the number of pages constituting one logical block.

The write control section 100, when completing write operations for data, a rewrite table and chain information, writes prescribed 16 bits of a physical address of a write page onto which the rewrite table has been written into a region 50 specified by an identification number of the rewrite table as a first physical address (S1012 in Fig. 11). Then, the write control section 100 updates a value of the flag region 90 of a page A in which a secondary allocation table 80 authorized as 'an invalid table' as described above is stored to an invalid value (S1013 in Fig. 11).

While in the above description, a write unit for data of the non-volatile memory 2 is one page A, in the memory device 1 of the present invention, the flag region 90 can be updated independently of other regions within the same page thereof. That is, in a case where a value of a flag region 90 after erasing data in an initial state of the non-volatile memory 2 is '00', '00' is used as a valid value while 'FF' is used as an invalid value. In that case, the write control section 100 comes to be able to update a value of a flag region 90 from a valid value to an invalid value (that is, '00' → 'FF') independently of other regions. Note that in a case where a value of a flag region 90 in an initial state of the non-volatile memory 2 is 'FF,' 'FF' is used as a valid value, while '00' is used as an invalid value. Note that an operation for converting a flag region 90 to an invalid value may be performed at the same time that a rewrite table is read out into the buffer units 31 to 34 and others.

The reason why a value of a flag region 90 of an invalid table is updated to an invalid value in such a way is that when the power supply of the memory device is again turned on after the power is turned off, the logical block table preparation unit 531 registers even a logical block C specified by a second physical address Ca registered on an invalid table on the logical block table 531 as 'valid.' If a flag region 90 is not updated, there arises a case where several tables 80 holding the same identification number reside within the non-volatile memory 2. This is because if such a case is a reality, where plural secondary allocation tables 80 with the same identification number coexist, a first physical address to be registered by the primary allocation table preparation unit 511 is not determined.

When the power supply of the memory device 1 of the present invention is again turned on after the power supply is tuned off, following rewriting of the update region 81 in which updating is performed to an invalid value, the primary allocation table preparation unit 511 can acquire a physical address of a page A, in whose management region Ab a valid secondary allocation table 80 is stored. Therefore, the primary allocation table preparation unit 511 comes to register prescribed 16 bits of a physical address of the valid secondary allocation table 80 on the primary allocation table 51 as a first physical address.

The write control section 100, when updating a value of a flag region 90 to an invalid value in S1015, updates the entry counter 54 and the logical block table 53 (S1014 in Fig. 11).

The update of the entry counter 54 is, for example, to add the number of write pages to a value held by the entry counter 54 corresponding to the write physical blocks B1 to B4. The update of the logical block table 53 is to register a logical block C to which a preceding page ar on which data has been written belongs on the logical block table 53 as 'valid.'

Moreover, the write control section 100, when determining that no data is stored in a page A in which a secondary allocation table 80 is stored in S1008, goes to S1010 without performing S1009.

The address register 55 is updated by the address register preparation unit 551, for example, when the memory device 1 receives a write request or with prescribed cycles . The update is, for example, that the address register preparation unit 551 refers a value held by the entry counter 54 corresponding to a prescribed physical block B, for example, to delete a physical address of a physical block B by which a value of the entry counter 54 amounts to 32 from the address register 55. Note that when the address register 55 is updated, a value of the entry counter 54 is automatically updated to '0' by the address register preparation unit 551.

In the description of operations in power-on, the physical block table preparation unit 521 determines whether or not a physical block is defective. The write control section 100, when in a write operation, may also determine whether or not a write physical block is a defective block. In the latter case, the write control section 100 is operated as the defective physical block determination unit 522, the use state setting unit 523 and the valid state setting unit 532.

### [Data Reading]

A storage capacity of the non-volatile memory 2 of the memory device 1 of the present invention is , as described above, 1 gigabyte and that of a logical block C is 16 kilobytes; therefore, 2^16 logical blocks C are configured in the non-volatile memory 2. Therefore, 16 bit information is required for expressing one logical block C configured in the non-volatile memory 2.

In this architecture, for example, a logical address S of 16 bits for specifying a to-be-read logical block C is included in a data read request transmitted from the data input/output device 7.

For example, when a read request for a logical block C1 shown in Fig. 12 is transmitted from the data input/output device 7, the read request is received by the input/output control section 4 and the read request is transferred to the read control section 60 by the input/output control section 4 when receiving.

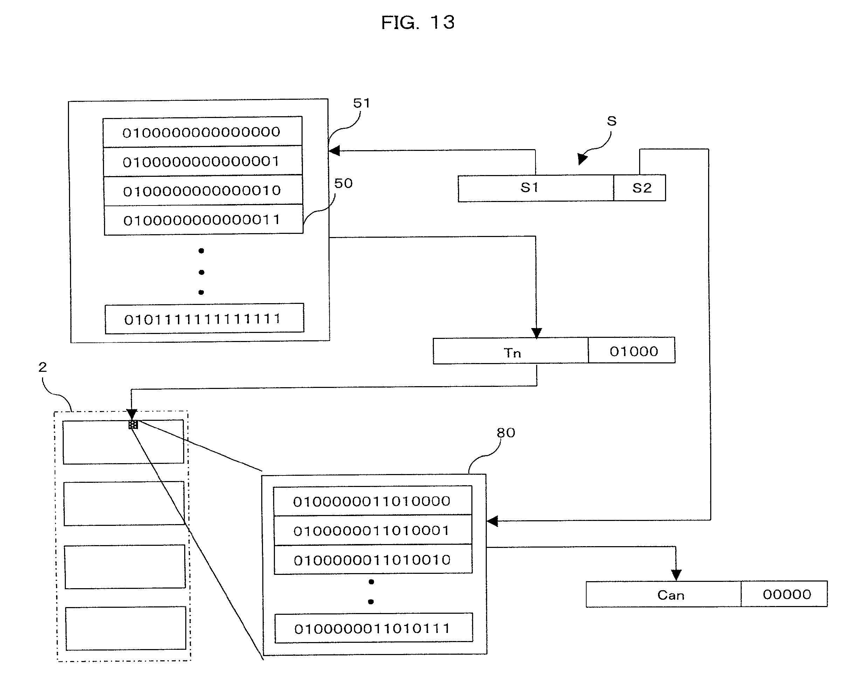

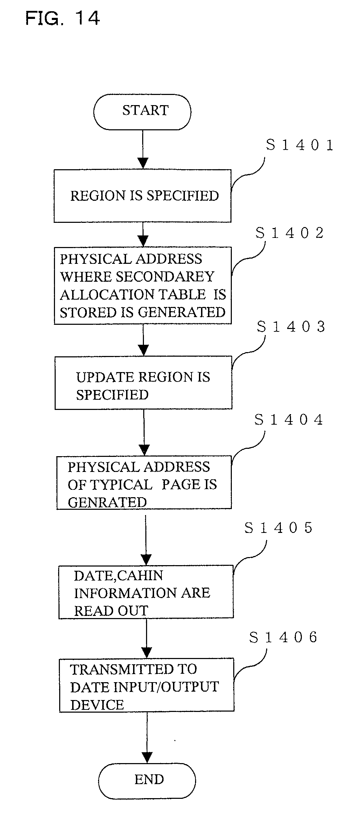

The read control section 60, when receiving the read request, uses the upper 13 bits S1 of a logical address S included in the read request as shown in Fig. 13 to specify one region 50 of the primary allocation table 51 (S1401 in Fig. 14).

The read control section 60 reads a first physical address Tn (n : 0 to 2^13 - 1) registered on the specified region 50 to further add '01000' to the read first physical address and to generate a physical address (Tn + 01000) of a page A in which a secondary allocation table 80 is stored (S1402 in Fig. 14).

Then, the read control section 60 specifies one update region 81 of a secondary allocation table 80 stored in a page A with the generated physical address using the lower 3 bits S2 of the logical address (S1403 in Fig. 14). The read control section 60 reads a second physical address Can (n : 0 to 2^3 - 1) stored in the specified update region 81 to add '00000' to the second physical address Can and to generate a physical address (Can + 00000) of a preceding page ar (S1404 in Fig. 14).

By specifying a physical address of a preceding page ar using two tables in such a way, a capacity of a primary allocation table 51 provided in RAM as shown below can be reduced.

In a case where, for example, one secondary allocation table 80 is, as described above, constituted of 8 update regions 81 and can store 8 second physical addresses Ca therein, a storage capacity of a primary allocation table 51 is obtained as follows:

Since second physical addresses Ca corresponding to 8 preceding pages ar can be stored on one secondary allocation table 80, the number of secondary allocation tables 80 necessary for specifying 2^16 preceding pages a amounts to 2^16/2^3 = 2^13.

Therefore, the primary allocation table 51 for specifying a secondary allocation table 80 is only required to hold 2^13 first physical addresses, leading to the presence of 2^13 regions 50. Accordingly, a capacity of the primary allocation table 51 is 16 bits × 2^13 = 16 kilobytes.

On the other hand, in a case where a second physical address Ca is specified only with a table provided in RAM, the table requires to hold 2^16 second physical addresses Ca therein. In this case, a capacity of the table is 16 bits x 2^16 = 128 kilobytes. In this way, a capacity of RAM is reduced in the memory device 1 of the present invention.

When a physical address of a preceding page ar (the page 1 of Fig. 12) of a logical block C1 is generated, the read control section 60 reads out data and chain information C10 and C11 written on the preceding page ar using the bus D1 connected to the preceding page ar to the buffer 31 (S1405 in Fig. 14).

Then, the read control section 60 refers to the read-out chain information C10 and C11 to read data and chain information stored in pages A of physical addresses indicated by the chain information C10 and C11. Here, since the chain information C10 and C11 indicate physical addresses of the respective pages 2 and 3, the read control section 60 uses data and chain information stored in pages 2 and 3 through the buses D2 and D3 to read out them into the buffers 32 and 33.

Since the read control section 60 can read out data and chain information stored in the pages 2 and 3 using the two buses D2, D3, a quick read operation can be realized. In a case where chain information C10, C11 and C12 are stored in the management region Ab of a page (4k + 1), the read control section 60 can read out simultaneously data and chain information stored in pages (4k + 1), (4k + 2), (4k + 3), (4k + 4) using the 4 buses D1 to D4 into the buffers 31 to 34.

The read control section 60, in such a way, performs a read operation on data and chain information stored in pages A with a physical address indicated by the chain information, followed by the operations on as far as the last page of the logical block.

The read control section 60, when reading out data into the buffers 31 to 34, transmits the data to, for example, the input/output device 7 through the input/output control section 4 (S1406 in Fig. 14).

Of the read requests, there exists a specific data access request instructing reading of only data of a page with a page number larger than that of data stored, for example, in a page 20 of a logical block C1. The specific data access request includes the logical address S and a logical address of 5 bits indicating a logical address at the leading position of data, which is an object for the specific data access request (hereinafter referred to as "specific data access address").

When a specific data access request is transmitted to the memory device 1 from the data input/output device 7, the input/output control section 4 receives the specific data access request to transfer a logical address S and a specific data access address included in the specific data access request to the read control section 60.

The read control section 60, when receiving the logical address S and the specific data access address, determines on which page the specific data access address indicates data. Then, the read control section 60 uses the logical address S to specify a physical address of a preceding page ar as described above. The read control section 60, when specifying the physical address of a preceding page ar, reads data written in a page whose number is larger than that of a page (here, a page 20) indicated by the specific data access address using chain information. In such a way, chain information can also be used in a case where the read control section 60 accesses data that is an object for reading of a specific data access request.

A secondary allocation table 80 may also be configured of plural pages A. For example, a secondary allocation table 80 may also be configured of 4 pages having consecutive physical addresses. In a case where a secondary allocation table 80 is configured of 4 pages, a prescribed one page of the 4 pages is provided with a flag region 90 indicating 'valid' or 'invalid' of the secondary allocation table 80.

### [Erasure]

In a case where a write operation is performed with prescribed cycles as described above, in the non-volatile memory 2, there eventually exist many physical blocks B in which valid data and invalid data are stored. Since erasure of data in the non-volatile memory is performed in physical blocks B each as a unit, erasure of such physical blocks B in which valid and invalid data are stored automatically results in needless erasure of valid data.

In such a situation, in order to efficiently erase only invalid data and to increase an empty capacity of the non-volatile memory 2 without erasing valid data, data erasure is performed as follows.

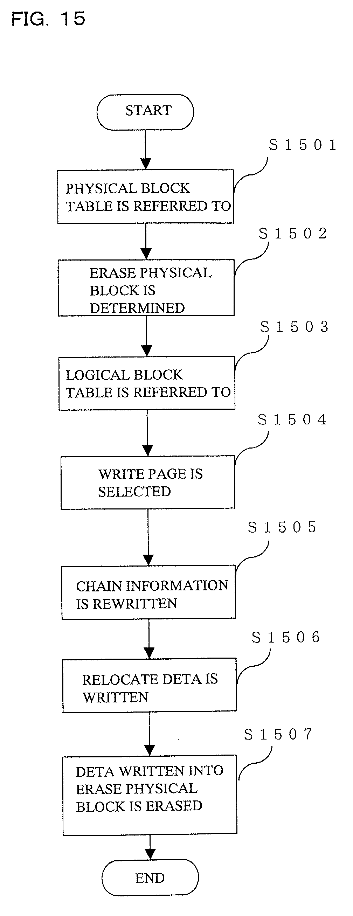

An erase control section 70 firstly refers to the physical block table 52 to then investigate a state of a logical block configured on physical blocks registered as physical block during use on the physical block table 52 by referring to the logical block table 53 (S1501 in Fig. 15).

An erase control section 70 determines physical blocks B on which only two or less valid logical block is configured of physical blocks B registered as physical blocks during use on the physical block table 52 as erase physical blocks (S1502 in Fig. 15).

The erase control section 70 uses chain information to understand of which set of physical blocks the logical block C (hereinafter referred to as "valid logical block") is configured (S1503 in Fig. 15).

Subsequent to this, the erase control section 70 reads out all of valid logical blocks C (including a valid logical block C part of which is constituted of an erase physical block or erase physical blocks) constituted of an erase physical block or blocks into the buffers 31 to 34 as relocate data. Note that the relocate data also includes a secondary allocation table 80 on which a second physical address specifying a physical address of a preceding page ar of a valid logical block C included therein.

The erase control section 70, when reading the relocate data, notifies the write control section 100 of reading out of the relocate data into the buffers 31 to 34.

The write control section 100 here selects a write page into which the relocate data is written in a manner similar to selection of a write page for data transmitted from the data input/output device 7 (S1504 in Fig. 15). The write control section 100, when selecting a write page, rewrites chain information stored in the relocate data on the basis of a physical address of a write page (S1505 in Fig. 15). For example, all the physical addresses of write pages are written in advance in the management region Ab of a preceding page of a logical block C read-out in the buffers 31 to 34. The write control section 100, when rewriting chain information, writes the relocate data read-out in the buffers 31 to 34 into a write page (S1506 in Fig. 15). Moreover, the write control section 100 writes a secondary allocation table 80 included in the relocate data into a page A, prescribed 5 bits of whose physical address are '01000,' of write pages for relocate data. The write control section 100 updates a region 50 specified on the basis of an identification number of the secondary allocation table 80 to prescribed 16 bits of a physical address of a page A into which the secondary allocation table 80 has been written.

The write control section 100, when writing the relocate data, updates the entry counter 54 and the logical block table 53 in a manner similar to a case where a write request is issued from the data input/output device 7. The write control section 100, when updating the entry counter 54 and the logical block table 53, notifies the erase control section 70 of having written relocate data.

The erase control section 70, when receiving the notification, not only erases data stored in the erase physical block, but also registers the erase physical block on the physical block table 52 as an erased physical block (S1507 in Fig. 15).

While in the above description, as conditions for determining an erase physical block, the following ones are set: (1) that a physical block of interest has been registered as a physical block during use on the physical block table 52; and (2) that only 2 or less valid logical block has been configured, another condition may be added that no physical address has been held in the address register 55. Moreover, the condition is not limited to the case as described above, but a condition may also substitute therefor that only one or no valid logical block is configured. By selecting a physical block B in which much of invalid data is stored as the erase physical block, the erase control section 70 has only to relocate a small volume of data the other physical blocks.

Note that an erase timing of invalid data is not limited in any way, but, for example, the erasure may be automatically performed by the erase control section 70 with prescribed cycles.

Note that in the description of operations in power-on, the physical block table preparation unit 521 determines whether or not a physical block is defective . The erase control section 70 may also determine whether or not a to-be-erased physical block is a defective block when the erase unit 70 performs an erase operation. In this case, the erase control section 70 is operated as the defective physical block determination unit 522, the use state setting unit 523 and the valid state setting unit 532.

### Second Embodiment

The write control section 100 performs an operation updating a value of a flag region 90 of a page A in which a secondary allocation table 80 that has been authorized as an invalid table in the above description is stored. In order to perform a write operation as fast as possible, however, such an updating operation has to be deleted.

Therefore, the above operation is deleted such that the write control section 100 determines a write page A into which a rewrite table read out in the buffers 31 to 34 is written is in a manner as described below to copy the secondary allocation table 80 to the determined page A.

First of all, the write control section 100 determines whether or not a page A satisfying conditions that a physical address thereof is larger than a page A in which the invalid table is stored and that prescribed 5 bits of a physical address thereof is '01000' exists among writable pages A within the same physical block B as the invalid table. A condition that prescribed 5 bits are '01000' is because in this embodiment, only a page A, prescribed 5 bits of whose physical address are '01000' can store the secondary allocation table 80. If a page A satisfying the conditions exists, the write control section 100 determines a page A whose physical address is the smallest of pages satisfying the conditions as a page A into which a relocate table is stored. The write control section 100, when storing a rewrite table into thus determined page A, does not perform an operation for updating a value of a flag region 90 of the invalid table to a value indicating ' 'invalid'.

In a case where no page A satisfying the conditions is available, the write control section 100 determines a page A that belongs to a prescribed physical block B other than physical blocks B in which an invalid table is stored, and whose physical address is the smallest of pages A, prescribed 5 bits of whose physical address are '01000' as a write page for rewrite data. The write control section 100, when storing a rewrite table into thus determined page A, updates a value of a flag region 90 of an invalid table to an invalid value in a manner similar to the first embodiment.

When the write control section 100 determines a page A into which a rewrite table is written, the logical block table preparation unit 531 and the primary allocation table preparation unit 511 prepares the logical block table 53 and the fist table 51 in a manner as described below.

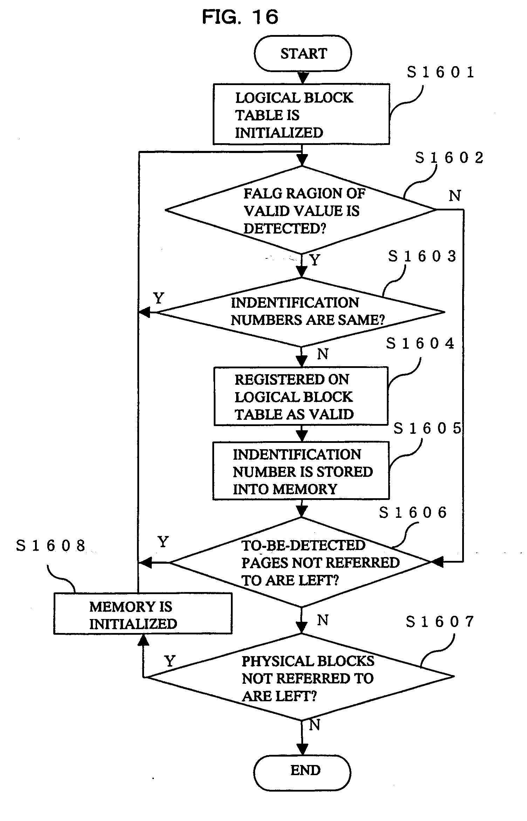

When the power supply of the memory device 1 is turned on, the logical block table preparation unit 531 at first initializes the logical block table 53 (S1601 in Fig. 16). Subsequent to this, the logical block table preparation unit 531 performs an operation as described below in each physical block B.

The logical block table preparation unit 531 recognizes a page A, prescribed 5 bits of whose physical address are '01000' as a to-be-detected page. Then, the logical block table preparation unit 531 refers to values of flag regions 90 in decreasing order of physical addresses from largest to smallest of the to-be-detected pages A to detect a to-be-detected page, a value of the flag region 90 of which is a valid value (S1602 in Fig. 16). The logical block table preparation unit 531, when detecting a to-be-detected page for the first time in the detection operation, refers to a second physical address registered on a secondary allocation table 80 stored in the to-be-detected page without performing S1603. The logical block table preparation unit 531 registers a logical block C specified by a second physical address registered on a secondary allocation table 80 on the logical block table 53 as 'valid' (S1604 in Fig. 16). Then, the logical block table preparation unit 531 stores an identification number held by a secondary allocation table 80 detected for the first time into a memory 535 (S1605 in Fig. 16).

The logical block table preparation unit 531, when registering the logical block C as 'valid,' refers to values of flag regions 90 in decreasing order of physical addresses from largest to smallest of the to-be-detected pages A, a physical address of each of which is smaller than that of the to-be-detected page detected for the first time to detect a to-be-detected page, a value of the flag region 90 of which is a valid value. The logical block table preparation unit 531, when detecting a to-be-detected-page, a value of the flag region of which is a valid value, determines whether or not an identification number held by a secondary allocation table 80 stored in the page A is the same as an identification number stored in the memory 535 (S1603 and S1604 in Fig. 16).

If it is determined as not the same, the logical block table preparation unit 531 registers a logical block C specified by a second physical address Ca registered on the secondary allocation table 80 on the logical block table 53 as 'valid' to store an identification number held in the secondary allocation table 80 into the memory 535 (S1605 in Fig. 16). If it is determined as the same, the logical block table preparation unit 531 restarts detection of a to-be-detected page, a value of whose flag region 90 is a valid value, without registering a logical block C, specified by a second physical address Ca registered on the secondary allocation table 80, on the logical block table 53.

In such a way, the logical block table preparation unit 53 registers only a logical block C specified by a second physical address Ca registered on a secondary allocation table holding an identification number not stored in the memory 535 on the logical block table 53 as 'valid.'

The logical block table preparation unit 531, when referring to the flag regions 90 of all the to-be-detected pages of a prescribed physical block (S1606 in Fig. 16), initializes the memory 535 to perform the detection operation on a physical blocks B, to-be-referred pages of each of which have not been referred yet to (S1607 to S1608 in Fig. 16).

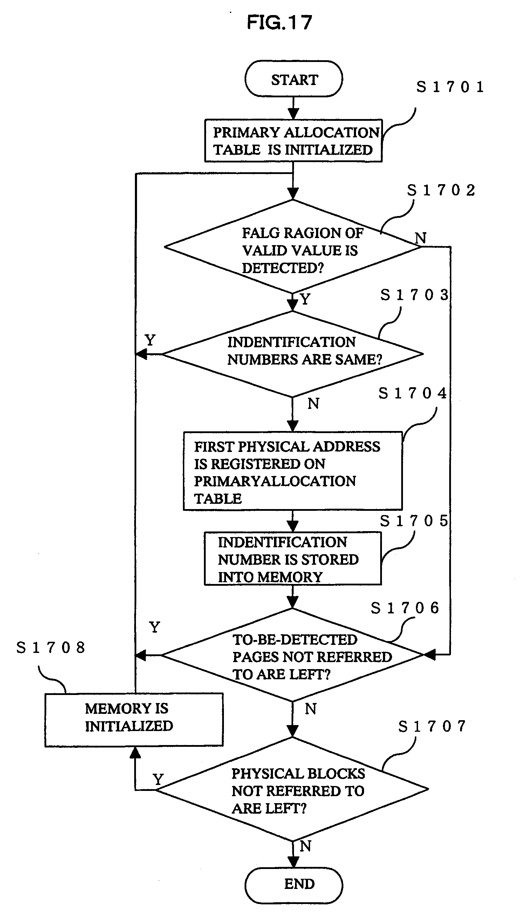

The primary allocation table preparation unit 511, when power is turned on, initializes the primary allocation table 51 (S1701 in Fig. 17), performs an operation as described below on each of physical blocks B in a manner similar to the logical block table preparation unit 531.

The primary allocation table preparation unit 511 refers to values of flag regions 90 sequentially in decreasing order of physical addresses from largest to smallest of to-be-detected pages of a prescribed physical block B (S1702 in Fig. 17). When detecting a to-be-detected page for the first time in the detection operation, the primary allocation table preparation unit 511 goes to S1704 without performing S1703. That is, the primary allocation table preparation unit 511 registers prescribed 16 bits of a physical address of the to-be-detected page on a region 50 indicated by an identification number held by a secondary allocation table 80 stored on the to-be-detected page as a first physical address (S1704 in Fig. 17).

The primary allocation table preparation unit 511, when registering the first physical address, refers to values of flag regions 90 in decreasing order of physical addresses from largest to smallest of the to-be-detected pages A, a physical address of each of which is smaller than that of the to-be-detected page detected for the first time to detect a to-be-detected page, a value of the flag region 90 of which is a valid value. The primary allocation table preparation unit 511, when detecting a to-be-detected page, a value of the flag region 90 of which is a valid value, determines whether or not an identification number held by a secondary allocation table 80 stored in the to-be-detected page is the same as that stored in the memory 515 provide in the primary allocation table preparation unit 511(S1703 and S1704 in Fig. 17).

If it is determined as not the same, the primary allocation table preparation unit 511 registers prescribed 16 bits of a physical address of a to-be-detected page in which the secondary allocation table 80 is stored on a region 50 indicated by an identification number held by the secondary allocation table 80 as a first physical address ). Then, the primary allocation table preparation unit 511 stores an identification number held by a secondary allocation table 80 detected for the first time into a memory 515 (S1705 in Fig. 17). If it is determined as the same, the primary allocation table preparation unit 511 does not register prescribed 16 bits (first physical address ) of a physical address of a to-be-detected page on a region 50 indicated by an identification number held by the secondary allocation table 80.

In such a way, the primary allocation table preparation unit 511 registers prescribed 16 bits of a physical address of a to-be-detected page in which a secondary allocation table 80 holding an identification number not stored in the memory 515 is stored on a region 50 indicated by the identification number as a first physical address.

The primary allocation table preparation unit 511, when completing reference to all the to-be-detected pages of a prescribed physical block B (S1706 in Fig. 17), initializes the memory 515 to perform the detection operation on a prescribed physical block B on which reference to to-be-detected pages has not been yet (S1707 and S1708 in Fig. 17).

In a way as described above, the logical block table preparation unit 531 prepares the logical block table 53, while the primary allocation table preparation unit 511 prepares the primary allocation table 51, thereby enabling preparation of the logical block table 53 and the primary allocation table 51 without updating a value of the flag region 90 corresponding to an invalid table to 'invalid' when a rewrite table is written into the same physical block B as that in which the invalid table is stored.

Note that the above conditions allows that, for example, if there exists a page A whose physical address is smaller than a page A in which an invalid table is stored and prescribed 5 bits of whose physical address are '01000' within the same physical block as the invalid table, the write control section may write a rewrite data into the page A. In that case, if there exists no page satisfying the condition, the write control section determines a page A that belongs to a prescribed physical block B other than a physical block in which an invalid table is stored, and whose physical address is the largest of pages A, prescribed 5 bits of each of whose physical addresses are '01000' as a page into which rewrite data is written.

When a page into which rewrite data is written is determined in such conditions, the logical block table preparation unit 531 and the primary allocation table preparation unit 511 perform reference to flag regions 90 of to-be-detected pages sequentially in increasing order of physical addresses, from smallest to largest.

As described above, a memory device of the present invention uses the primary allocation table and the secondary allocation table to convert a logical address to a physical address, which makes it possible to reduce a capacity of the primary allocation table provided in RAM. Therefore, a compact memory device with a large capacity can be realized.

Moreover, a memory device of the present invention can access all the write units constituting a logical block of interest at high speed by writing physical addresses constituting the logical block in a prescribed write unit or prescribed write units constituting the logical block as chain information.

Since states of data written in physical blocks are determined to perform selection of a write unit or write units into which data is written, or a physical block or physical blocks from which data is erased, data writing or data erasure can be efficiently performed. Since a value of a flag region of an invalid table is updated to an invalid value only when a rewrite table is written into a physical block different from the invalid table, a high speed write operation can be realized.

Moreover, by setting a use state of a defective physical block indicated by a physical block table to a valid state, a delay of writing can be suppressed. As a result, a high speed data access can be achieved. In addition, by setting a state of a logical block corresponding to a defective block, indicated by a logical block table to a valid state, a delay of erasure can be suppressed. As a result, a high speed data access can be realized.

## Claims

1. A memory device obtaining a physical address in a non-volatile memory from a logical address, comprising:
a primary allocation table obtaining a first physical address on the non-volatile memory corresponding to prescribed bits constituting said logical address; and
a secondary allocation table specified by said first physical address, and obtaining a second physical address on the non-volatile memory corresponding to bits different from said prescribed bits of said logical address.

2. The memory device according to claim 1, wherein said second physical address is information specifying a physical address of a representative write unit representing plural write units constituting a logical block which is a data block indicated by said logical address.

3. The memory device according to claim 2, comprising a writing means, in an operation configuring said logical block on said non-volatile memory, registering information for specifying a physical address of a representative write unit of said logical block on said secondary allocation table as said second physical address.

4. The memory device according to claim 1, comprising a writing means, in an operation configuring said logical block on said non-volatile memory, performing an operation invalidating a secondary allocation table specified by a first physical address corresponding to prescribed bits of a logical address indicating said logical block stored in prescribed write units, and performing an operation copying a secondary allocation table on which information for specifying a physical address of a representative write unit of said logical block is registered as said second physical address to other write units and writing information for specifying a physical address of said other write units into said primary allocation table as said first physical address.

5. The memory device according to claim 1, comprising a writing means, in an operation configuring said logical block on said non-volatile memory, performing an operation invalidating a secondary allocation table specified by a first physical address corresponding to a logical address indicating said logical block stored in prescribed physical blocks, each of which is an erase unit of data in said non-volatile memory, and performing an operation copying a secondary allocation table on which information for specifying aphysical address of a representative write unit of said logical block is registered as said second physical address to a prescribed page of another physical block and writing information for specifying a physical address of said page into said primary allocation table as said first physical address.

6. The memory device according to claim 1, comprising a primary allocation table preparation means preparing said primary allocation table on the basis of an identification number held in said secondary allocation table and a physical address of said secondary allocation table.

7. The memory device according to claim 4, comprising a primary allocation table preparation means preparing a primary allocation table on the basis of a physical address of a secondary allocation table that has not been invalidated.

8. The memory device according to claim 5, comprising a primary allocation table preparation means preparing a primary allocation table on the basis of a physical address of a secondary allocation table that has not been authorized as invalid, which has been detected for the first time, of plural secondary allocation tables each having the same identification number indicating a region of a primary allocation table, within the same physical block.

9. The memory device according to claim 2, comprising a logical block table preparation means preparing a logical block table indicating a state of a logical block that includes a representative write unit whose physical address is specified by said second physical address on the basis of a flag indicating whether a secondary allocation table on which said second physical address has been registered is valid or invalid.

10. The memory device according to claim 1, comprising:
a physical block table indicating a state of a physical block, which is an erase unit of data in said non-volatile memory;
an address register indicating a physical block, which is an object for writing data;
an entry counter indicating a data volume written into a physical block indicated in said address register; and
a writing means configuring a new logical block on said non-volatile memory on the basis of said physical block table, said address register and said entry counter.

11. The memory device according to claim 10, wherein said writing means updates said physical block table, said address register, said entry counter and a logical block table indicating a state of a logical block on the basis of a state of said logical block newly configured.

12. The memory device according to claim 10, comprising an erase means erasing data of a prescribed physical block on the basis of contents indicated by said logical block table, said physical block table and said address register.

13. The memory device according to claim 10, comprising a physical block table preparation means determining whether or not data has been written into said physical block to prepare said physical block table on the basis of the determination.

14. The memory device according to claim 10, comprising:
a defective physical block determination means determining whether or not said physical block is defective; and
a use state setting means setting a use state of said physical block indicated by said physical block table to being during use when it is determined by said defective physical block determinationmeans that said physical block is detective.

15. The memory device according to claim 10, comprising:
a defective physical block determination means determining whether or not said physical block is defective; and
a valid state setting means setting a state which a logical block table indicating a state of a logical block indicates for a logical block corresponding to said physical block determined as being defective by said defective physical block determination means, to a valid state.

16. The memory device according to any of claims 4, 5, 7 and 8, wherein a flag region storing a flag indicating whether a secondary allocation table is valid or invalid is provided in a write unit in which said secondary allocation table is stored.

17. A memory device comprising:
a table for acquiring a physical address of a representative write unit representing a logical block of write units of a non-volatile memory, constituting said logical block, which is a data block indicated by a logical address, and including a data region into which data is stored and a management region in which management information for managing data is stored, from said logical address; and
a writing means writing chain information for acquiring a physical address of a write unit other than said representative write unit, constituting the same logical block as said representative write unit.

18. The memory device according to claim 17, wherein said writing means writes said chain information into a management region of a write unit other than a write unit of which a prescribed management information is written into said management region.

19. The memory device according to claim 17, wherein said management information is a prescribed number or more of other chain information pieces.

20. The memory device according to claim 17, wherein said table includes:
a primary allocation table for acquiring a first physical address on a non-volatile memory corresponding to prescribed bits constituting said logical block; and
a secondary allocation table stored in a management region of a write unit specified by said first physical address and for acquiring a physical address of said representative write unit on the basis of bits other than said prescribed bits of said logical address, wherein
said management information is said secondary allocation table.

21. The memory device according to claim 17, comprising a read means reading a logical block on the basis of a physical address of said representative write unit and said chain information.

22. A memory device comprising:
a physical block table indicating a state of a physical block, which is an erase unit of data in a non-volatile memory;
an address register indicating a physical block, which is an object for writing data;
an entry counter indicating a data volume written into a physical block indicated in said address register; and
a writing means configuring a new logical block on said non-volatile memory on the basis of said physical block table, said address register and said entry counter.
